# EUROPEAN PATENT APPLICATION

(11) **EP 2 583 775 A1**
(43) Date of publication of application: **24.04.2013**
(21) Application number: 11797967.4
(22) Date of filing: 02.06.2011
(51) Int. Cl.: B23C 5/20, B23C 5/10

(54) **CUTTING INSERT AND INDEXABLE ROTARY CUTTING TOOL**

(30) Priority: 21.06.2010 JP 2010140511
(71) Applicant: Tungaloy Corporation, Iwaki-shi Fukushima 970-1144 (JP)
(72) Inventor: YOSHIOKA Shirou, Iwaki-shi Fukushima 970-1144 (JP)
(74) Representative: Vossius & Partner
(86) International application number: PCT/JP2011/062657
(87) International publication number: WO 2011/162081

(57) **Abstract**

A cutting insert suitable for pocket machining is provided. A cutting insert (10) includes a rake face (14); a flank (15); and a main cutting edge (11) formed in an intersecting portion between the rake face (14) and the flank (15) and extending in a direction intersecting a cutting direction of a milling tool, and includes at least one separating portion (12) not involved in cutting, in the middle of the main cutting edge (11) in a direction along the main cutting edge (11). The main cutting edge (11) is formed of two cutting edges (11a, 11b) separated by the separating portion (12), and when the cutting insert is attached to a tool body (1) of the cutting tool, cutting edge angles κ1 and κ2 of the cutting edges (11a, 11b) are set within a range from 5° or more to 20° or less.

## Description

### Technical Field

The present invention relates to a cutting insert and an indexable milling tool to which the cutting insert is attached.

### Background Art

In prior-art pocket machining performed in manufacture of a molding die or the like, a milling tool capable of drilling might be used. In the pocket machining, steady discharge of produced chips from a machined recess (pocket) is one of conditions for efficient machining, and air-blow is used for that purpose. In this discharging method, a high-pressure air is injected toward the machined recess so as to blow out the chips to the outside of the hole by its wind pressure.

Even if the air-blow is used, injection of air at such high pressure that can blow out the chips of any size is not possible, and generation of chips as broken up as fine as possible is required for a milling tool for performing the pocket machining. As a method of breaking up the chips, Patent Literature 1 discloses a cutting insert in which a plurality of nicks is formed in a flank so as to discontinue a cutting edge.

### Citation List

### Patent Literature

PTL 1: Japanese Patent Laid-Open No. 2007-283482

### Summary of Invention

### Technical Problem

However, the cutting insert having a nick as disclosed in Patent Literature 1 cannot cut a portion where the nick is formed if the cutting insert is used singularly. Thus, a cutting insert having another shape for additionally cuting a portion which is not cut by the one cutting insert with a nick is further needed. Therefore, if the cutting insert having a nick is used, a plurality of types of inserts needs to be prepared all the time, which incurs an increase in a storage cost. Moreover, even if the inserts have different shapes, the difference is slight, and there was a chance of an attachment error of attaching an insert other than the type which should have been attached.

The present invention was made in order to solve the above-described problems and has an object to provide a cutting insert capable of breaking up chips with one type of insert and a milling tool to which the cutting insert can be attached. Solution to Problem

That is, the cutting insert of the present invention is a cutting insert removably attached to a tool body of a milling tool, including :
a rake face;
a flank; and
a cutting edge formed at an intersecting portion between the rake face and the flank, wherein
a main cutting edge of the cutting edge comprises at least two separated small cutting edges;
two adjacent small cutting edges among the at least two small cutting edges are connected to a separating portion, respectively;
the separating portion is formed between the two adjacent small cutting edges on the intersecting portion between the rake face and the flank; and
when seen from the front of the rake face, a connection portion between one of the small cutting edges located on the rear side with respect to the separating portion in a feeding direction and the separating portion is formed closer to the center of the cutting insert than a virtual straight line extending through the other small cutting edge located on the front side with respect to the separating portion in the feeding direction to the side of the one small cutting edge located on the rear side in the feeding direction.

Preferably, the cutting insert has a cutting edge angle of small cutting edge located on the rear side in a feeding direction in two adjacent small cutting edges interposing a single separating portion therebetween is smaller than a cutting edge angle of the other small cutting edge located on the front side in the feeding direction.

Preferably, in the cutting insert, when a cutting edge angle of one small cutting edge is set to 5° or more and 20° or less, cutting edge angles of all the other small cutting edges are 5° or more and 20° or less.

Preferably, the separating portion is formed in a substantially linear in the cutting insert.

To the indexable milling tool of the present invention, the cutting insert of any of the present inventions described above is able to be removably attached.

### Advantageous Effects of Invention

In the cutting edge of the cutting insert of the present invention, the main cutting edge is separated into a plurality of portions, but since those cutting regions partially overlap each other, broken-up chips can be produced and moreover, machining with one type of a cutting insert is possible. Thus, a cost and a labor required for management of the cutting insert of the present invention become extremely smaller than before.

Moreover, when the cutting insert of the present invention is to be attached, it is not necessary to consider at which spot in the tool body which insert is attached, extremely smooth replacement/attachment works become possible.

In the main cutting edge of the cutting insert of the present invention, at least one separating portion not involved in cutting and connecting two separated small cutting edges is provided in the middle of the main cutting edge in a direction along the main cutting edge. Chips produced from each of the small cutting edges separated from each other are small in length in a direction along the main cutting edge and in volume, and such compact and light-weighted chips are easily discharged from the pocket by air-blow in pocket machining, and a defect in the cutting edge caused by biting of the chips or damage on a worked surface are suppressed.

In the indexable milling tool according to the present invention, since the cutting insert of the present invention is used, no labor is required such as attachment of inserts of different types depending on an insert attachment seat. Thus, a mechanical work is facilitated, and time for replacement work is made shorter than before.

Moreover, since the chips produced by the indexable milling tool according to the present invention are broken up and the thickness is small, if the indexable milling tool of the present invention is used in pocket machining, various problems caused by non-discharge of the chips from a machined hole such as biting of the chips and the like become difficult to occur.

### Brief Description of Drawings

Fig. 1 is a front view of a cutting insert according to an embodiment of the present invention;
Fig. 2 is a right side view of the cutting insert illustrated in Fig. 1;
Fig. 3 is a plan view of the cutting insert illustrated in Fig. 1;
Fig. 4 is a view in the direction of the arrow X in Fig. 1;
Fig. 5 is an enlarged view of a main cutting edge of the cutting insert in Fig. 1;
Fig. 6 is a front view of an end mill according to an embodiment of the present invention;
Fig. 7 is a right side view of an essential part of the end mill illustrated in Fig. 6; and
Fig. 8 is a plan view of the essential part of the end mill illustrated in Fig. 6.

### Description of Embodiments

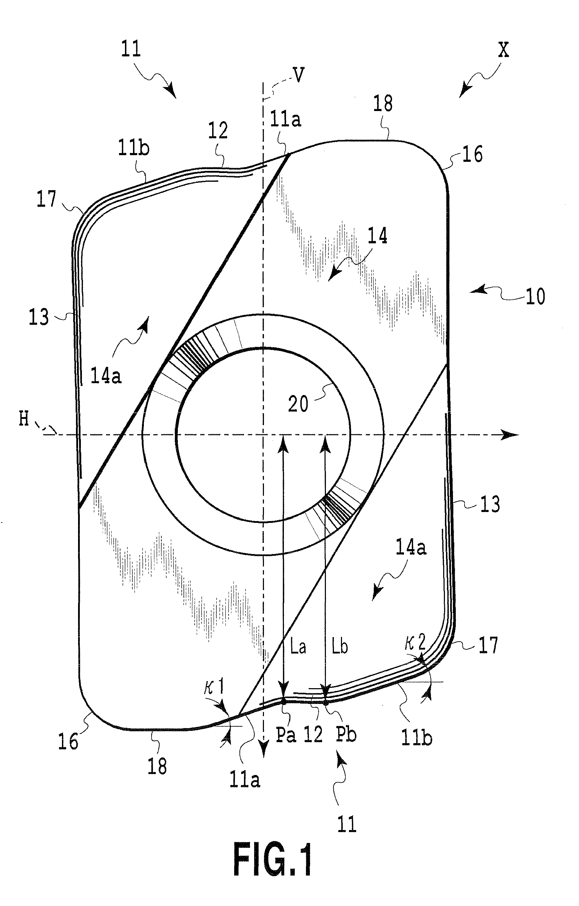

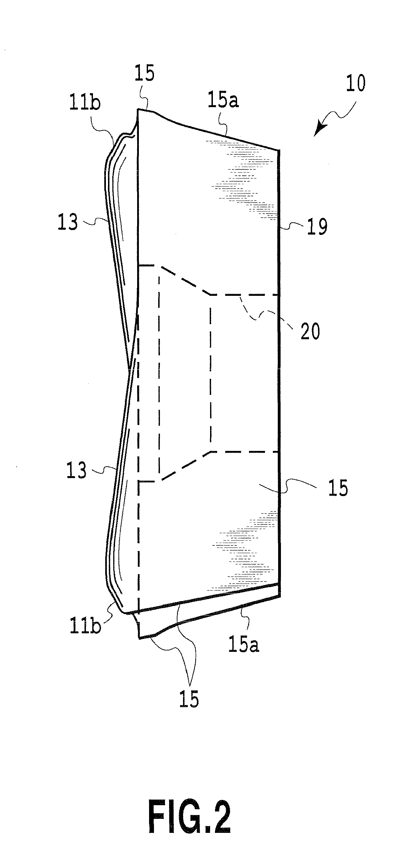

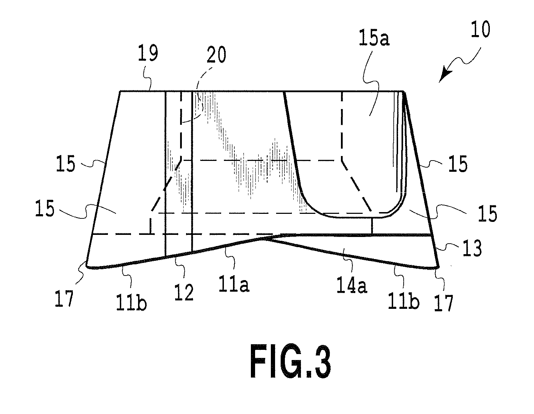

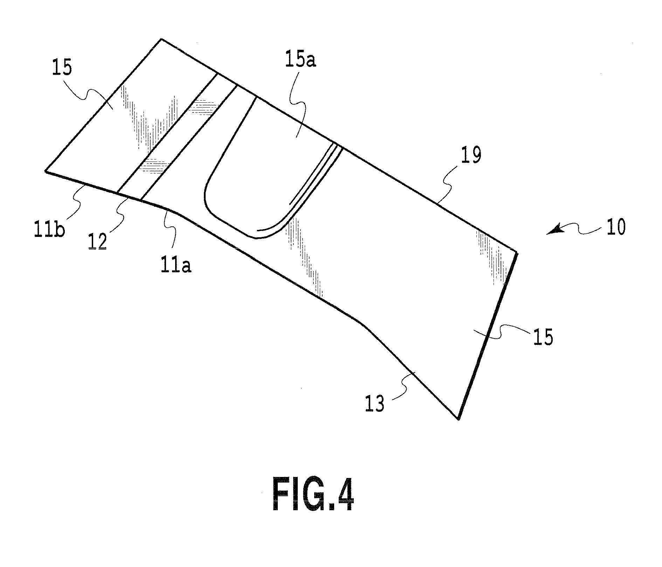

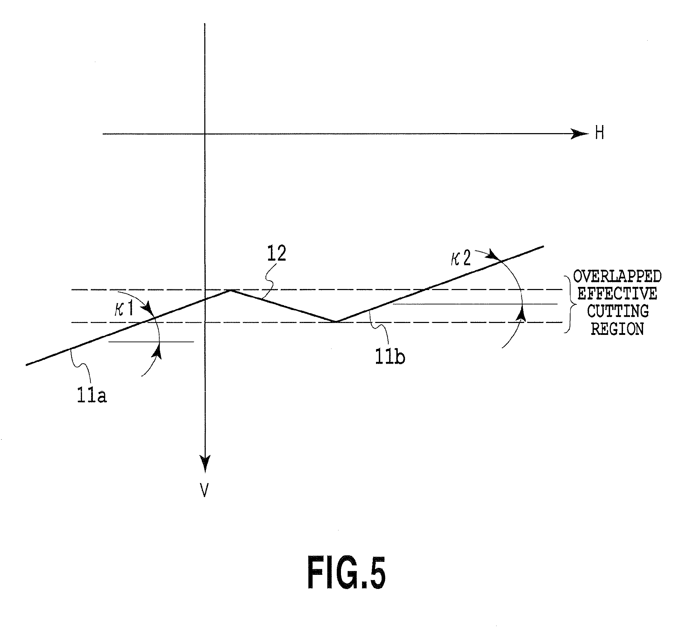

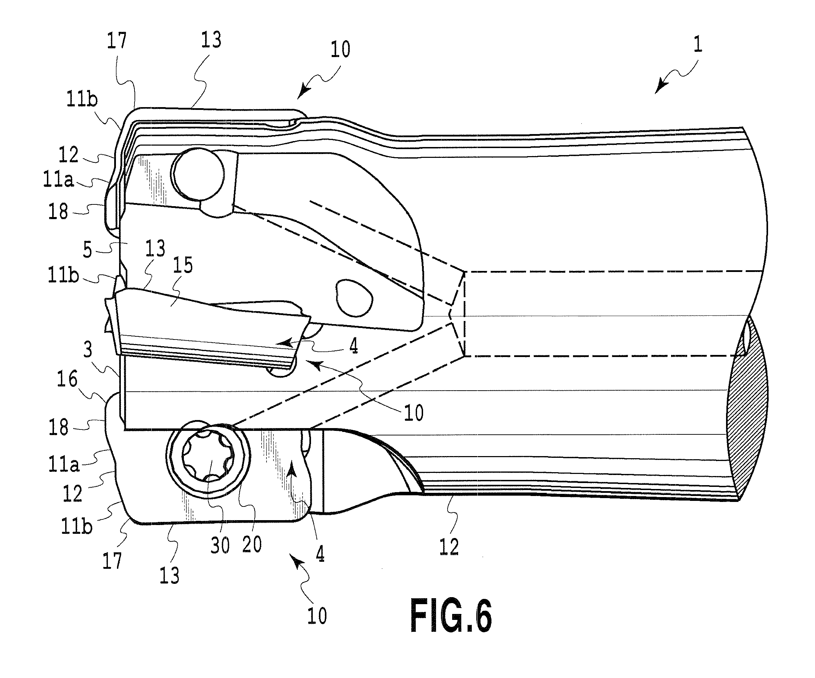

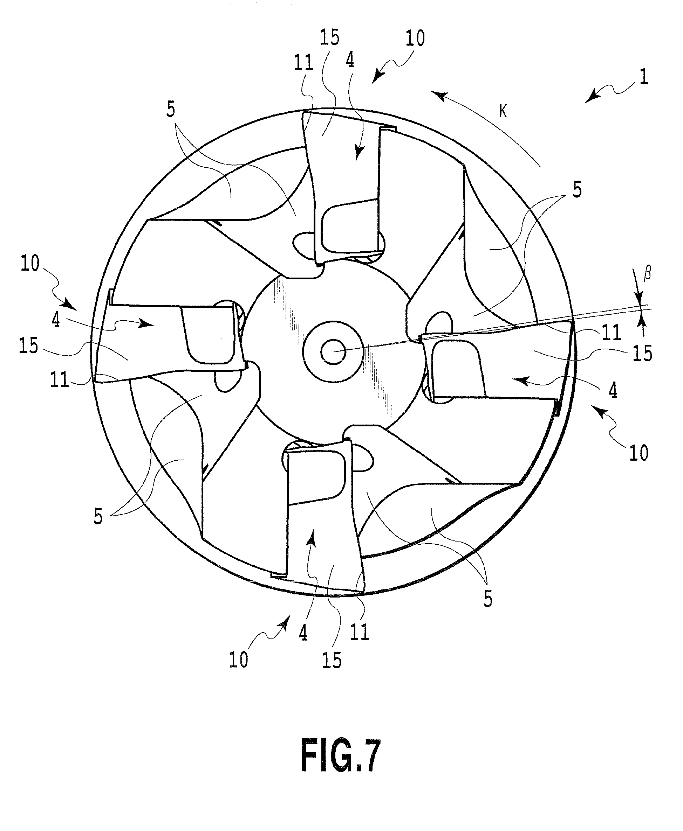

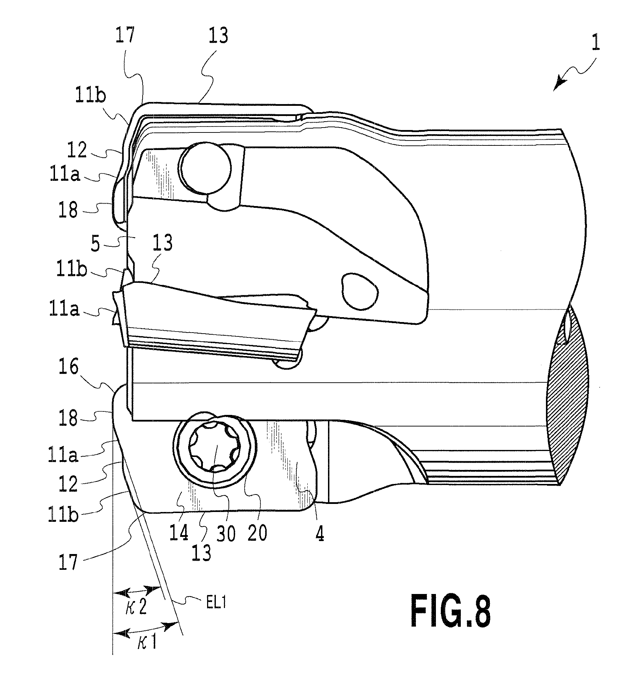

An end mill according to an embodiment of the present invention will be described below by referring to the attached drawings. Fig. 1 is a font view of a cutting insert used in the end mill. Figs. 2 and 3 are a right side view and a plan view of the cutting insert illustrated in Fig. 1, respectively. Fig. 4 is a view in the direction of the arrow X in Fig. 1. Fig. 5 is an enlarged view of a main cutting edge of the cutting insert in Fig. 1. Fig. 6 is a front view of the end mill when seen from an axial direction. Figs. 7 and 8 are a right side view and a plan view of an essential part of the end mill illustrated in Fig. 5, respectively.

A cutting insert 10 according to this embodiment has a substantially parallelogram plate shape as illustrated in Fig. 1, in which in opposing upper and lower faces, a rake face 14 is formed on the upper face and a seat face 19 is formed on the lower face, a flank 15 is formed on a side face extending between the opposing upper and lower faces, and a cutting edge is formed at an intersecting portion between the rake face 14 and the flank 15. At the center in the opposing upper and lower faces, a mounting hole 20 is formed penetrating the upper and lower faces.

The cutting insert 10 is a so-called positive type insert in which each of the flanks 15 is inclined inward as it gets closer to the lower face from the cutting edge and at least the cutting edge is made of a hard material such as cemented carbide, cermet and ceramic, ultra high pressure sintered compact such as diamond and CBN or any of the above-described material coated with metal compounds containing Ti, alumina or the like.

The cutting edge formed on a pair of short sides of the rake face 14 is provided with a sharp angle corner 16, a wiper cutting edge 18 continuing to the sharp angle corner 16, a main cutting edge 11 continuing to the wiper cutting edge 18, and an obtuse angle corner 17 continuing to the main cutting edge 11, and the wiper cutting edge 18 extends linearly in a direction substantially in parallel with an H axis. The H axis is an axis in parallel with a feeding direction in this embodiment, and the right side is the feeding direction in Fig. 1. A length of the wiper cutting edge 18 is formed so as to be equal to or slightly larger than a maximum feed rate assumed in a cutting tool to which the cutting insert 10 is attached. The wiper cutting edge 18 may have an arc shape.

The main cutting edge 11 is formed on the intersecting portion between the rake face 14 and the flank 15. This main cutting edge 11 is separated into two short small cutting edges by a separating portion 12 formed on the intersecting portion between the rake face 14 and the flank 15 similarly to the main cutting edge 11. Then, in the explanation below, the small cutting edge on the rear side with respect to the separating portion 12in the feeding direction will be referred to as a first cutting edge 11a, and the small cutting edge on the front side with respect to the separating portion 12 in the feeding direction will be referred to as a second cutting edge 11b.

A peripheral cutting edge 13 is formed on each of a pair of long sides of the rake face 14, and the cutting insert 10 is attached so that the peripheral cutting edge 13 is in parallel with the central axis of the rotating tool body or a back taper is created.

A seat face 19 formed on the lower face of the cutting insert 10, a side face extending from the peripheral cutting edge 13 (flank 15), and a side face extending from the wiper cutting edge 18 (flank 15a) function as contact faces in contact with the seat face and a peripheral wall of a chip seat provided in the rotating tool body.

As illustrated in Fig. 1, when the rake face 15 is seen on the front, the first cutting edge 11a and the second cutting edge 11b are formed linearly. However, the first cutting edge 11a and the second cutting edge 11b may be curved in an arc shape. A cutting edge angle κ1 of the first cutting edge 11a is set within a range of 5° or more and 20° or less, and a cutting edge angle κ2 of the second cutting edge 11b is also set within a range of 5° or more and 20° or less. In other words, it is designed such that, when the cutting insert 10 is attached to the rotating tool body so that the cutting edge angle κ1 of the first cutting edge 11a is 5° or more and 20° or less, the cutting edge angle κ2 of the second cutting edge 11b is also within a range of 5° or more and 20° or less at the same time. If the cutting edge angles are set within the above-described range, a chip thickness becomes small and thus, cutting resistance applied to a cutting boundary portion is suppressed small even in high-feed machining with a large feed rate, and occurrence of chipping, defect and the like at that portion is suppressed.

In Fig. 1, assuming that the cutting insert 10 of this embodiment is fed in the H-axis direction as described above and used so as to cut in a V-axis direction perpendicular to the H axis, each of the cutting edge angles κ1 and κ2 is illustrated. In this case, the cutting edge angle κ1 is defined by an angle formed by the first cutting edge 11a and an axis line in parallel with the H-axis, while the cutting edge angle κ2 is defined by an angle formed by the second cutting edge 11b and the axis line in parallel with the H-axis. Each of the cutting edge angles κ1 and κ2 is set separately and independently without being affected by a set value of one of the cutting edge angles. Therefore, the cutting edge angle κ1 and the cutting edge angle κ2 might be different from each other or these two values might be the same. However, if the magnitude of the cutting edge angle κ2 is larger than that of the cutting edge angle κ1, the maximum value of the depth of cut when being considered as the insert as a whole increases, and efficient machining becomes possible. If the first cutting edge 11a or the second cutting edge 11b has an arc shape, each of the small cutting edges is designed so that the maximum value of the cutting edge angle is within a range of 5° or more and 20° or less.

The linear first cutting edge 11a of this embodiment is formed so that a distance (Lb) from a connection portion (Pb) between the separating portion 12 and the second cutting edge 11b to the H-axis is longer than a distance (La) from a connection portion (Pa) between the separating portion 12 and the first cutting edge 11a to the H-axis. In other words, the connection portion (Pb) between the first cutting edge 11a and the separating portion 12 is formed closer to the center of the cutting insert 10 than a virtual straight line (EL) obtained by extending the second cutting edge 11b toward the first cutting edge 11a.

Thus, the separating portion 12 is formed closer to the rear side in the V-axis direction than the axis line passing through the connection portion Pb with the second cutting edge 11b and in parallel with the H-axis and is not brought into contact with a workpiece even if the second cutting edge 11b is performing cutting and is not involved in cutting. Moreover, if the separating portion 12 as above is formed, an overlapped effective cutting region at the same time is produced between the effective cutting region of the first cutting edge 11a and the effective cutting region of the second cutting edge 11b. As a result, by using the single cutting insert 10 of this embodiment or just a plurality of the cutting inserts 10 of this embodiment, a portion not cut is not formed in the workpiece. Since the cutting insert 10 of this embodiment is a positive insert, a side face extending from the separating portion 12 to the lower face is also formed of an inclined face inclined inward of the cutting insert 10 as it goes to the lower face.

The cutting insert 10 of this embodiment does not form a portion not cut on the machined face as described above. Therefore, cutting by using only the cutting insert 10 of this embodiment is possible, and a storage cost is reduced than before. Moreover, if the cutting insert 10 of this embodiment is used in a milling tool using a plurality of cutting inserts, since labor to consider the type of the cutting insert for each attachment spot is not necessary, efficient cutting edge replacement can be realized.

The separating portion 12, the first cutting edge 11a, and the second cutting edge 11b are not limited to the above-described embodiment. That is, a main technical idea of the cutting insert 10 of the present invention is that the main cutting edge is separated into two or more short small cutting edges by providing a portion not involved in the cutting on the main cutting edge and an effective cutting region of each separated small cutting edge is partially overlapped with each other and thus, the cutting insert having the main cutting edge in a shape realizing the above is within a technical scope of the present invention.

Thus, the separating portion is not limited to a linear shape as in the above-described embodiment but may have a curved shape, for example. In that case, too, if the connection portion between the small cutting edge and the separating portion located on the rear side with respect to the separating portion in the feeding direction is formed closer to the center of the cutting insert than a virtual extension line obtained by extending the other small cutting edge on the front side in the feeding direction toward the small cutting edge located on the rear side in the feeding direction, the cutting edge angle can be set such that the separating portion is no longer involved in the cutting and the effective cutting regions the two small cutting edges are partially overlapped. If the separating portion is a curved line, the curved line may be curved in a recess shape toward the center of the cutting insert or may be curved in a projection shape toward the outside of the cutting insert.

If the connection portion between the small cutting edge on the rear side in the feeding direction and the separating portion is located closer to the outside of the cutting insert than the virtual extension line of the small cutting edge located on the front side in the feeding direction, whatever cutting edge angle is set, the separating portion is also involved in the cutting. The term "front side in the feeding direction" refers to a place on the same side as the feeding direction than a certain position when the certain position is based, and the term "rear side in the feeding direction" refers to a place on the side in the direction opposite to the feeding direction with respect to the certain position when the certain position is based.

As another form of the cutting insert of the present invention, though the first cutting edge 11a and the separating portion 12 cross each other at an obtuse angle in this embodiment, they may cross each other at a sharp angle to the contrary. Similarly, the separating portion 12 and the second cutting edge 11b may cross each other at a sharp angle or may cross each other at an obtuse angle.

As another form of the cutting insert of the present invention, one of the small cutting edges with respect to the separating portion can be linear and the other small cutting edge can have an arc shape (not shown). As still another form, the main cutting edge can have two or more separating portions and three or more small cutting edges (not shown). In this case, a relationship between the arbitrary separating portion and the small cutting edge connected to the both ends thereof needs to be such that, as described above, the connection portion between the small cutting edge located on the rear side with respect to the separating portion in the feeding direction and the separating portion is formed closer to the center of the cutting insert than the virtual extension line obtained by extending the other small cutting edge on the front side in the feeding direction toward the small cutting edge located on the rear side in the feeding direction. As another form of the cutting insert of the present invention, a triangle, a polygonal plate shape such as a pentagon, or a negative insert can be used as replacement.

Subsequently, the milling tool of the present invention will be described by using an end mill which is one embodiment thereof. As illustrated in Figs. 6 to 8, the cutting insert 10 of the above-described embodiment is removably attached to a chip seat 4 provided at a leading end peripheral portion of the tool body 1 having a substantially rod shape by a clamp screw 30 inserted into the mounting hole 20. On the front side in a tool rotating direction K of the chip seat 4, a chip pocket 5 formed by cutting off an outer peripheral face 2 of the tool body is provided adjacent to the chip seat 4, and in front of the rake face 14 of the cutting insert 10 attached to the chip seat 4, a sufficient space for accommodating chips is formed.

The cutting insert 10 is attached to the tool body 1 such that, as known from Figs. 7 and 8, the obtuse angle corner 17, the second cutting edge 11b, and the first cutting edge 11a protrude from the leading edge face 3 of the tool body 1 and also, the outer peripheral cutting edge 13 protrudes from the outer peripheral face 2 of the tool body 1. Here, the cutting insert 10 is attached so that an end portion on the side located on the base end side of the tool body 1 is somewhat tilted toward the center of the tool body 1. As a result, the cutting edge angles κ1 and κ2 are within a range of 5° or more and 20° or less, and the outer peripheral cutting edge 13 becomes parallel with the central axis of the tool body 1 or has a back taper.

In this end mill, as illustrated in Figs. 7 and 8, end portions of the first cutting edge 11a and the second cutting edge 11b connected to each end portion of the separating portion 12 are separated from each other in the radial direction of the tool body 1 and also, the second cutting edge 11b located closer to the obtuse angle corner 17 side than the separating portion 12 is located closer to the leading end of the tool body 1 than an extension line EL1 of the first cutting edge 11a located closer to the sharp angle corner 16 than the separating portion 12 and is substantially in parallel with the extension line EL2. Moreover, the connection portion (corresponding to Pb in Fig. 1) between the separating portion 12 and the second cutting edge 11b portion is located closer to the leading end of the tool body 1 than the connection portion (corresponding to Pa in Fig. 1) between the separating portion 12 and the first cutting edge 11a.

Since the connection portion between the separating portion 12 and the second cutting edge 11b protrudes toward the leading end of the tool body 1 further than the connection portion between the separating portion 12 and the first cutting edge 11a, the entire separating portion 12 is formed retreating closer to the rear end of the tool body 1 than the second cutting edge 11b. Thus, the separating portion 12 becomes a portion not brought into contact with the workpiece at all and not involved in the cutting during machining. It is needless to say that the side face extending from the separating portion 12 to the lower face is also formed of an inclined face inclined inward of this cutting insert as it goes to the lower face so as not to touch the workpiece.

According to the cutting insert and the end mill of this embodiment, one separating portion 12 not involved in the cutting is formed in the middle of the main cutting edge 11, and as a result, the main cutting edge 11 is separated into two parts, that is, the first cutting edge 11a and the second cutting edge 11b, and thus, each cutting edge produces a chip which is short and small in the volume and has a width according to a cutting edge length thereof. In pocket machining of a molding die, such compact and light-weight chips are easily discharged from the pocket by air-blow and thus, a defect in the main cutting edge 11, the outer peripheral cutting edge 13 and the like caused by biting of the chips can be suppressed.

Since the cutting edge angle κ1 of the first cutting edge 11a and the cutting edge angle κ2 of the second cutting edge 11b are set within a range of relatively small values, that is, a range of 5° or more and 20° or less, substantial chip thicknesses of the first cutting edge 11a and the second cutting edge 11b become small, and a load during the cutting applied to the entire cutting edges is reduced. As a result, damage on the first cutting edge 11a or the second cutting edge 11b or particularly damage on the cutting boundary portion is suppressed, and a life of the entire cutting edge is improved.

In a cutting tool having a small cutting edge angle of the main cutting edge, a contact length between the main cutting edge and the workpiece is long in general and a width of the chip is large. However, in the cutting insert and the end mill of this embodiment, since the main cutting edge 11 is split into the first cutting edge 11a and the second cutting edge 11b, the width of the chip produced by the respective cutting edges becomes shorter than the length of the main cutting edge 11. On the other hand, since the cutting edge angle κ1 of the first cutting edge 11a and the cutting edge angle κ2 of the second cutting edge 11b are set to small values, respectively, the thicknesses of the chips produced by the first cutting edge 11a and the second cutting edge 11b become small. As known from the above, since the separating portion 12 is formed on the main cutting edge 11, the cutting insert 10 and the end mill of this embodiment can generate a chip which is small in width and thickness. The chip which is small in width and thickness is formed into a spring shape which is compact, light-weighted, and elastically deformed easily and is easily discharged. Thus, an effect of suppressing defect on the cutting edge caused by biting of the chips becomes extremely high.

Since the respective parts of the first cutting edge 11a and the second cutting edge 11b are included in a region between a line in parallel with the H-axis passing through the connection portion Pa of the first cutting edge 11a and a line in parallel with the H-axis passing through the connection portion Pb of the second cutting edge 11b (See Fig. 5), an effective cutting region of the first cutting edge 11a and an effective cutting region the second cutting edge 11b continue without disconnection. Thus, an uncut portion is not produced on the workpiece.

The rake face 14 of the cutting insert 10 according to this embodiment has a leading end of the obtuse angle corner 17 at the highest level in the thickness direction of the cutting insert 10, and as it separates from the obtuse angle corner 17, the level gradually lowers in the thickness direction of the cutting insert 10. An inclined face 14a formed on such rake face 14 has a substantially triangular shape having the obtuse angle corner 17 as one apex when seen from a direction opposite to the rake face 14, and rake angles of the first cutting edge 11a, the second cutting edge 11b, and the outer peripheral cutting edge 13 continuing this inclined face 14a are increased thereby.

In the end mill attached with the cutting insert 10 with increased rake angles, a radial direction rake angle β of the first cutting edge 11a and the second cutting edge 11b mainly performing cutting increases. With the increase of the radial direction rake angle β, the cutting resistance is reduced, and stable machining with less tool rattling is realized in the pocket machining. The radial direction rake angle β is preferably a positive value rather than a negative value. If the radial direction rake angle β is positive, cutting resistance decreases and a direction of the cutting resistance is directed toward the center of the tool body 1. As a result, defect of the cutting edge is prevented. If the radial direction rake angle β is positive, an outflow direction of the chips produced by the first cutting edge 11a and the second cutting edge 11b is also directed toward the center of the tool body 1. Then, in wall face machining in which cutting is performed by leaving the wall face on the outer periphery side of the tool body 1 or particularly the wall face machining in pocket machining, the chips are prevented from being bitten in a gap between the wall face and the outer peripheral face 2 of the tool body. As a result, adhesion of the chips to the wall face is suppressed, and a quality of appearance of the wall face is improved.

Since the peripheral cutting edge 13 is arranged in parallel with the central axis of the tool body 1 as in the end mill of this embodiment, the wall face of the workpiece is finished with high accuracy. However, if a contact length between the peripheral cutting edge 13 and the wall face becomes large, the increase in the cutting resistance might incur rattling of the tool, and thus, in order to prevent this, it may be so configured that the long side of the rake face 14 of the cutting insert 10 is inclined inward from the peripheral cutting edge from the middle thereof to the sharp angle corner 16 or is recessed so that a back taper is provided arbitrarily.

The present invention has been described in the above-described embodiment and its variation and the like with some degree of specificity, but the present invention is not limited to them. For example, an end mill is used as an embodiment of a milling tool in the above description, but the milling tool of the present invention can be also applied to a milling tool other than the end mill such as a front milling cutter, a side cutter and the like. It should be understood that the present invention is capable of various modifications and changes without departing from the spirit or scope of the invention described in claims. That is, the prevent invention includes any variations, applications, and equivalents contained in the idea of the present invention specified by the claims.

## Claims

1. A cutting insert removably attached to a tool body of a milling tool, comprising:
a rake face;
a flank; and
a cutting edge formed at an intersecting portion between the rake face and the flank, wherein
a main cutting edge of the cutting edge comprises at least two separated small cutting edges;
two adjacent small cutting edges among the at least two small cutting edges are connected to a separating portion, respectively;
the separating portion is formed between the two adjacent small cutting edges on the intersecting portion between the rake face and the flank; and
when seen from the front of the rake face, a connection portion between one of the small cutting edges located on the rear side with respect to the separating portion in a feeding direction and the separating portion is formed closer to the center of the cutting insert than a virtual straight line extending through the other small cutting edge located on the front side with respect to the separating portion in the feeding direction to the side of the one small cutting edge located on the rear side in the feeding direction.

2. The cutting insert according to claim 1, wherein
a cutting edge angle of small cutting edge located on the rear side in a feeding direction in two adjacent small cutting edges interposing a single separating portion therebetween is smaller than a cutting edge angle of the other small cutting edge located on the front side in the feeding direction.

3. The cutting insert according to claim 1 or 2, wherein
when a cutting edge angle of one small cutting edge is set to 5° or more and 20° or less, cutting edge angles of all the other small cutting edges are 5° or more and 20° or less.

4. The cutting insert according to any of claims 1 to 3, wherein the separating portion is formed in a substantially linear shape.

5. An indexable milling tool, to which the cutting insert according to any of claims 1 to 4 is able to be removably attached
